# EUROPEAN PATENT SPECIFICATION

(11) **EP 3 131 335 B1**
(45) Date of publication and mention of the grant of the patent: **16.05.2018**
(21) Application number: 15306296.3
(22) Date of filing: 14.08.2015
(51) Int. Cl.: H04W 36/00

(54) **HANDOVER**
ÜBERGABE
TRANSFERT INTERCELLULAIRE

(43) Date of publication of application: 15.02.2017
(73) Proprietor: Alcatel Lucent, 91620 Nozay (FR)
(72) Inventor: Worrall, Chandrika, Newbury, Berkshire RG14 6LE (GB); Palat, Sudeep, Swindon, Wiltshire SN5 6EE (GB)
(74) Representative: Sarup, David Alexander

(56) References cited:
- EP-A1- 2 187 668
- EP-A1- 2 793 526
- US-A1- 2015 172 988
- US-A1- 2015 230 134

## Description

### FIELD OF THE INVENTION

Aspects and embodiments relate to methods of handing over a communication link between a cell and user equipment in a wireless communication network from a source cell to a target cell, network nodes and computer program products operable to perform those methods.

### BACKGROUND

Wireless communications systems are known. In those known systems, radio coverage is provided to user equipment, for example, mobile telephones, by geographical area. An access node, for example, a base station, is located in each geographical area to provide the required radio coverage. User equipment in the area served by a base station receives information from the base station and transmits information and data to the base station.

Information and data transmitted by base stations to user equipment occurs on channels of radio carriers known as downlink carriers. Information and data transmitted by user equipment to base stations occurs on channels of radio carriers known as uplink carriers.

In known single carrier wireless telecommunications systems, user equipment can move between geographical base station coverage areas. When in a connected state and user equipment move between regions of radio coverage, there is a need to handover communication between the network and the user equipment between base stations to maintain a continuity of service.

EP 2 187 668 A1 describes methods and devices for handover in a wireless telecommunications network. According to the described method, a mobile acquires handover information when a handover instruction message is received. The mobile continues reception in a source cell until handover execution time when the handover is determined to be a synchronous handover. At handover execution time, the mobile follows handover information to perform a switch of control cell and begin downlink synchronisation with a target cell. If downlink synchronisation establishment succeeds before the expiration of a handover protection time, the mobile determines that uplink synchronisation establishment is not necessary for the target cell and executes a synchronous handover process without the need for random access. If downlink synchronisation establishment does not succeed before expiration of a handover protection time, the mobile determines that uplink synchronisation establishment is necessary for the target cell and executes a handover process that requires random access transmission.

Although methods of handover are known, it is desired to provide an alternative method of handover which may mitigate issues with known handover techniques.

### SUMMARY

A first aspect provides a method according to claim 1.

The first aspect recognises that during a typical handover procedure, user plane interruption may occur. In particular, in an LTE telecommunications system high handover latency may be experienced by a user. It is possible to address user plane interruption by implementing a synchronous handover procedure. According to synchronous handover techniques, user equipment may be provided with "activation time". At that activation time a user equipment is instructed to detach from a source cell and connect to a target cell. However, the first aspect recognises that use of a single order having a specific activation time may be troublesome. In particular, it may be difficult to manage cases in which handover does not successfully occur. The first aspect recognises that it may be possible to provide a substantially more synchronous handover procedure without using a specific activation time.

The first aspect recognises that whilst synchronous handover may offer one solution to reduce user plane interruption during handover, such existing synchronous handover methods typically rely upon use of an "activation time". The activation time requires both source and target base station to be aware of that activation time. The activation time is generally provided in absolute time or system frame numbers. In the case that handover does not occur, the source base station typically believes handover has occurred and yet the user equipment is not communicating with the target base station. As a result, handover is unsuccessful. It will therefore be understood that synchronous handover methods may be such that error recovery is not easily manageable and the handover decision is not reversible.

The first aspect recognises that synchronous handover may be managed in such a way that multiple time instances for execution of handover may occur. Such a handover implementation may be achieved by using a periodic trigger as a synchronization point in the handover process. Use of such a periodic handover point may allow a handover method which avoids use of a specific "activation time" and may allow for breaking and making handover to happen at substantially the same time, thereby mitigating the chance of user plane interruption. Furthermore, the system proposed in accordance with the first aspect allows for multiple attempts at handover if a first attempt has failed, and yet allows user equipment to continue to communicate with a network if the first attempt fails. That is to say, the first aspect may provide a method according to which error handling may be appropriately handled in the case of failure. Furthermore, the first aspect may maintain legacy signalling flow in relation to handover procedure.

The method may comprise: receiving a handover command message comprising an indication of a plurality of handover instances at which the user equipment is to attempt establishment of a communication link with the target cell. The method may comprise: attempting establishment of a communication link with the target cell at a handover instance and monitoring for receipt of an indication that a communication link with the target cell has been established. The method may comprise maintaining a communication link with the source cell through the plurality of handover instances, until the indication that the communication link with the target cell is established is received.

The method of the first aspect may be performed by user equipment within a wireless communication network. Accordingly, the user equipment may maintain connection with the network beyond the first handover instance by maintaining contact with the source cell. It will be appreciated that such a communication link may not be maintainable indefinitely, since the network has previously determined that handover to the target cell is appropriate. Maintenance of a communication link with the source cell beyond a first handover instance may allow for minimisation of disruption to end user experience, if initial attempts at handover to a target cell are unsuccessful.

According to one embodiment, the indication of a plurality of handover instances comprises one or more of: an indication of a plurality of periodically occurring instances; an indication of a plurality of specific instances. Accordingly, the user equipment and a source cell (and target cell) may all be aware of a plurality of instances at which user equipment may operate to try to perform handover. Provision of a number of instances at which handover may be possible may assist handover to be successful.

According to one embodiment, the indication of a plurality of handover instances comprises at least one of: a first instance at which the target cell expects an attempt at establishment of a communication link and a period to be applied to subsequent attempts; an instruction to attempt establishment of a communication link in accordance with the target cell PRACH configuration; or an instruction to attempt establishment of a communication link in accordance with the target cell D-SR configuration. Accordingly, the handover command may effectively re-use information and configuration(s) which already exist between the target cell and user equipment operating within the target cell to effect handover timing of user equipment seeking to establish a communication link with the target cell. Alternatively or additionally, specific new information may be included within a handover message to be read by user equipment to allow for identification of the plurality of identified handover instances.

According to one embodiment, the method comprises: receiving an indication of a handover command expiry time; and requesting radio connection reestablishment if no communication link between the user equipment and the source cell or the target cell exists at the handover command expiry time. Accordingly, although user equipment may be configured to maintain a communication link with the source cell, the network has identified that handover to the target cell is appropriate, and in the event that handover fails, the user equipment may be configured, rather than maintaining a weak or failing communication link with a source cell, to invoke a radio connection reestablishment procedure.

According to one embodiment, the indication of handover command expiry time comprises one or more of: an explicit time window; a maximum number of attempts at establishment of a communication link with the target cell. Accordingly, more than one opportunity to successfully perform handover to the target cell may be provided, but rather than allow user equipment to indefinitely attempt handover and risk falling into a situation in which it has no communication link with the network and no chance of obtaining one, the network may set a "time out" in relation to the handover instructions.

A second aspect provides a computer program product operable, when executed on a computer, to perform the method of the first aspect.

A third aspect provides user equipment according to claim 7.

According to one embodiment, the indication of a plurality of handover instances comprises one or more of: an indication of a plurality of periodically occurring instances; an indication of a plurality of specific instances.

According to one embodiment, the indication of a plurality of handover instances comprises at least one of: a first instance at which the target cell expects an attempt at establishment of a communication link and a period to be applied to subsequent attempts; an instruction to attempt establishment of a communication link in accordance with the target cell PRACH configuration; or an instruction to attempt establishment of a communication link in accordance with the target cell D-SR configuration.

According to one embodiment, the user equipment comprises: expiry time logic configured to receive an indication of a handover command expiry time; and request radio connection reestablishment if no communication link between the user equipment and the source cell or the target cell exists at the handover command expiry time.

According to one embodiment, the indication of handover command expiry time comprises one or more of: an explicit time window; a maximum number of attempts at establishment of a communication link with the target cell.

A fourth aspect provides a method according to claim 8.

Accordingly, the fourth aspect may be performed at a source cell within a network. In the event of handover, the source cell is configured to expect user equipment to perform handover at any one of the determined handover instances, but maintain the possibility of continuing a communication link with user equipment beyond the handover instances, in case the handover attempt to the target cell fails.

According to one embodiment, determining when the handover instances at which user equipment may attempt establishment of a communication link with the target cell will occur comprises: reading the handover command. Accordingly, the source cell may need to acquire information about the target cell and/or user equipment in order to know when the handover instances may occur. In order to gain that information, the source cell may itself be configured to read the handover command message sent to the user equipment.

According to one embodiment, determining when the handover instances at which user equipment may attempt establishment of a communication link with the target cell will occur comprises: requesting configuration information from the target cell.

Accordingly, the source cell may need to acquire information about the target cell and/or user equipment in order to know when the handover instances may occur. In order to gain that information, the source cell may request such information from the network, for example, via X2 signalling.

According to one embodiment, the indication that a communication link with the target cell has been established comprises: monitoring for an absence of communication from the user equipment after one of the handover instances. Accordingly, if user equipment ceases communication with a source cell after a handover instance, the source cell may assume that successful handover has occurred. The communication link between the source cell and user equipment may then no longer be supported by the source cell. One way for a source cell to identify the cessation of UE communication to the source cell can be based on the network identifying that the user equipment has stopped communicating with the source cell. That recognition may be based upon the absence of receipt of CQI, SRS, ACK/NACK messaging or in the general UCI.

According to one embodiment, the indication that a communication link with the target cell has been established comprises: receiving a handover complete message from the wireless communication network. Accordingly, if such a message is relayed from the target cell to the source cell, the source cell may assume that successful handover has occurred. The communication link between the source cell and user equipment may then no longer be supported by the source cell.

A fifth aspect provides a computer program product operable, when executed on a computer, to perform the method in accordance with the fourth aspect.

A sixth aspect provides a base station according to claim 14.

According to one embodiment, the determination logic is configured to determine when the handover instances at which user equipment may attempt establishment of a communication link with the target cell will occur by reading the handover command.

According to one embodiment, the determination logic is configured to determine when the handover instances at which user equipment may attempt establishment of a communication link with the target cell will occur by requesting configuration information from the target cell.

According to one embodiment, the indication that a communication link with the target cell has been established comprises: monitoring for an absence of communication from the user equipment after one of the handover instances.

According to one embodiment, the indication that a communication link with the target cell has been established comprises: receiving a handover complete message from the wireless communication network.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically the main components of a telecommunications network according to one embodiment; and
Figure 2 is a signalling diagram illustrating schematically the main components of a method of handover according to one arrangement.

### DESCRIPTION OF THE EMBODIMENTS

Before discussing the embodiments in any more detail, first an overview will be provided.

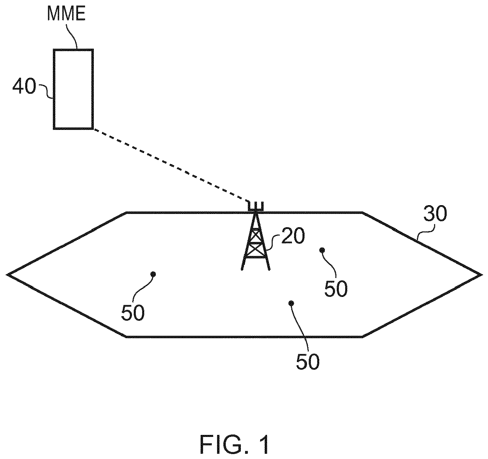

Figure 1 illustrates schematically the main components of a wireless telecommunications system 10, according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50.

When user equipment is within an area served by a base station 30, communication may be established between the user equipment and the base station over associated radio links. Each base station typically supports a number of sectors within the geographical area of service 30.

As user equipment 50 roam through the wireless telecommunications system they may move from an area of radio coverage 30 supported by one base station to an area of radio coverage 30 supported by another base station. In order to ensure continuity of service to user equipment when in active use, the wireless telecommunications system operates to "hand over" communication between a base station and user equipment between a source base station and towards a target base station.

Legacy handover in an LTE network is typically based on the principle of "break before make". According to such legacy LTE handover, user equipment is typically operable, after receiving and processing a handover command, to stop communication with the source cell and begin acquiring synchronisation with a target cell based on new configuration information received in the handover command message. Cell synchronisation takes some time. In order for the user equipment to begin communication with the target cell, the target cell must identify user equipment arrival in that cell. That process may typically be performed via contention-free random access procedures to communicate with the target cell. It will, however, be understood that the "break before make" process may result in a significant disruption to user experience, since there is significant time between the breaking of communication links with the source cell and the making of communication links with the target cell. That elapsed time corresponds to user plane interruption seen by an end user.

It will be appreciated that in order to minimise user plane interruption, break and make time between a source cell and target cell may advantageously be minimised. It is recognised that one way to achieve such minimisation of disruption time is to use synchronous handover techniques. Typically, synchronous handover occurs in cases where source and target cells are time synchronised. In such an arrangement, user equipment can be provided with an exact time; for example, using a system frame number (SFN), when the user equipment operates to begin executing handover from a source cell to a target cell. The planned timing is sent to user equipment in a handover command message. Upon receipt of a handover command, user equipment may be operable to execute handover at the absolute timing indicated in the received handover command. In order to speed up such a procedure, some arrangements allow for random access to a target cell to be skipped by the user equipment and the user equipment may be operable to assume or derive uplink timing in advance by considering network synchronisation.

However, the synchronous handover methods envisaged are such that they may typically suffer from one or more of the following issues: error handling may be difficult if the handover command includes an absolute time of handover, since if the user equipment fails to execute handover at the specific time indicated then the source cell is no longer operable to expect communication with that user equipment; according to existing synchronous handover methods, a handover command complete message may be sent to a source cell. This is different to a legacy handover procedure where a handover message is typically sent to a target cell. The handover message is typically sent to a target cell because when handover is occurring it is usually because user equipment is moving towards a target cell and away from a source cell. If the handover message is to be sent to the source cell, that communication must occur on a degrading channel and the user equipment may not be able to send the handover complete message to the source cell. According to such a handover method, user equipment may typically only have one attempt to execute a handover procedure, that attempt being set by an absolute time. Furthermore, typical synchronous handover methods require network nodes to be time synchronised.

Aspects and embodiments may be based upon a legacy handover procedure according to which user equipment may be provided with a handover command in an RRC connection reconfiguration message. In that RRC connection reconfiguration message, information may typically be provided to user equipment in relation to, for example: dedicated scheduling request configuration (D-SR); P-RACH configuration, or further information may be included in such a message. Those pieces of information may be provided in relation to a handover target cell. In short, information may be provided to the user equipment and source cell in relation to particular settings of a target cell.

According to some aspects, the user equipment may be informed in a handover command message as to whether to use an enhanced handover procedure in accordance with aspects and embodiments described herein, or whether to follow a legacy handover procedure.

According to an enhanced handover procedure, user equipment may be required to perform a handover procedure according to, for example, the following method steps:

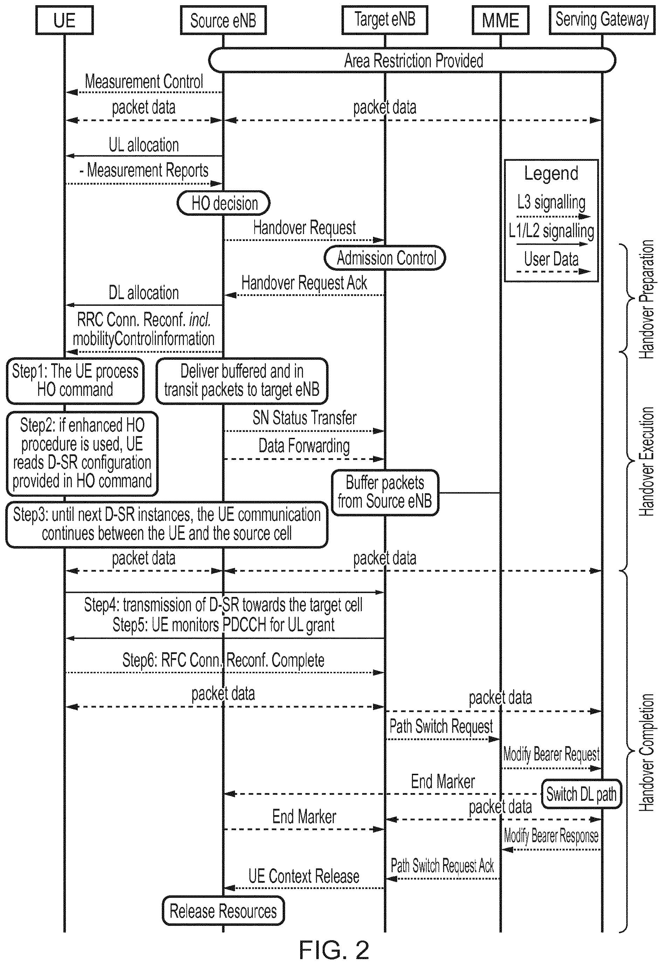

Figure 2 illustrates schematically a signalling diagram showing an enhanced handover procedure based on dedicated scheduling request transmissions. The steps without specific numbering are those which are common to legacy signalling handover procedures.

The particular steps which may occur in the arrangement shown schematically in Figure 2 are that at step 1 user equipment may be operable to process a received handover command.

At step 2, if the user equipment determines that an enhanced handover procedure is to be used the user equipment may be operable to read D-SR configuration information provided in the handover command.

At step 3, the user equipment may be operable to monitor channels from a source cell and perform uplink transmissions; for example, SRS, CQI and similar, towards the source cell, at least until the next available D-SR instance.

At step 4, at the next available D-SR instance in relation to the target cell, user equipment may be operable to cease communication with a source cell and prepare D-SR transmissions towards a target cell. It will be appreciated that such an arrangement requires that the user equipment be downlink synchronised with the target cell. Therefore, the user equipment may be configured to gain downlink synchronisation with the target cell prior to the next D-SR instance after the handover command message is received. That is to say, the user equipment obtains that downlink synchronisation in time for the next D-SR instance.

It will be appreciated that the next available D-SR may be loosely defined since it is determined by the user equipment. If the handover command is delayed due to retransmission or some other reason then the user equipment maybe configured to determine the next available D-SR instance based on the time the user equipment receives and processes the handover command. The user equipment is configured to perform D-SR towards the target cell in accordance with the enhanced handover procedure.

At step 5 the user equipment may be operable to monitor PDCCH of the target cell for an uplink grant.

At step 6, if an uplink grant is received, the user equipment may be configured to transmit a handover command complete message to the target cell.

It will be appreciated that the source cell may be made aware that the user equipment is to be handed over and that there are various instances at which handover may occur. That is to say, the source cell maybe made aware of the configuration of the target cell, such that the occasions on which the user equipment may attempt handover are known to the source cell and, thus, communication with the user equipment may be maintained until notification is received that handover has been successfully completed to the target cell.

According to some arrangements, the user equipment maybe configured to attempt handover a predetermined number of times or maximum number of times. Only if the maximum number of retransmissions or attempts is reached would the handover procedure be deemed to have failed. That is to say, if, for example, the D-SR transmission is not successful (ie, the maximum number of D-SR transmissions are made by the user equipment without receiving an uplink grant from the target cell), the user equipment maybe configured to consider that communication to the target cell as having failed. In such an instance the user equipment may initiate RRC connection re-establishment procedure. It will further be appreciated that in the particular example illustrated in Figure 2, namely a D-SR based handover procedure, the source and target cell will need to be time synchronised.

According to some arrangements, the user equipment maybe configured to attempt handover a predetermined number of times or maximum number of times. Only if the maximum number of retransmissions or attempts is reached would the handover procedure be deemed to have failed. That is to say, if, for example, the D-SR transmission is not successful (ie, the maximum number of D-SR transmissions are made by the user equipment without receiving an uplink grant from the target cell), the user equipment maybe configured to consider that D-SR transmission to the target cell as having failed. In such an instance the user equipment may initiate random access procedure by transmission of PRACH preamble (contention based) to the target cell.

From the network perspective, the source cell may be configured to perform communication with the user equipment until:
a) the network identifies that the user equipment has stopped communicating with the source cell. This recognition may be based upon the absence of receipt of CQI, SRS, ACK/NACK messaging or in the general UCI;
b) in some arrangements the source cell may be made aware of the D-SR configuration of the target cell. Accordingly, at the D-SR, after successful transmission of an RRC connection reconfiguration message, the source cell may be aware that the user equipment may be continuing communication with the target cell. The source cell may be operable to acquire the D-SR configuration of the target cell, either by reading the handover command, or over X2 messaging. Successful transmission of the handover command may be determined based on the received HARQ feedback or RLC feedback received from the user equipment.

From a network perspective, the target cell performs communication with the user equipment according to the following general principles: that is to say, the target cell may expect communication with user equipment at the next configured D-SR instance. Thus, the target cell may be configured to expect user equipment arrival as early as the next configured D-SR after generation of the initial handover command.

If a target cell does not receive D-SR from the user equipment of interest at the next available D-SR instance, the target cell may be configured to expect a D-SR from the user equipment at various subsequent D-SR configuration instances.

Upon receipt of the handover command complete message from user equipment the target cell may be operable to perform a handover complete at the network side, in accordance with legacy handover procedures.

It will be appreciated that a short D-SR can be configured for the purposes of handover and after successful handover to a target cell the target cell may be such that it could reconfigure the user equipment with an appropriate D-SR configuration for actual data transmission.

Further arrangements of various aspects and embodiments may be such that the PRACH configuration of the target cell can be used instead of the D-SR configuration. That is to say, the PRACH configuration can be used in the handover command as a timer for handover execution by user equipment. Accordingly, the PRACH configuration of a target cell may be included in the handover command. Alternatively, the PRACH configuration of the target cell may be obtained by the user equipment from cell broadcast SIBs of a target cell. In either case, the user equipment is configured to obtain the PRACH configuration of the target cell. After obtaining the target cell PRACH configuration, the user equipment may behave in a similar manner to that described previously in relation to D-SR instances. In the case of use of PRACH, the user equipment performs communication with the source cell until the next determined PRACH instance of the target cell (as opposed to the next determined D-SR instance of the target cell). At the next PRACH instance, the user equipment may be operable to perform a RACH procedure towards the target cell. It will be appreciated that, in the case that PRACH configuration is used as a handover instance, the network nodes are not required to be time synchronised. However, the source cell may require the downlink timing of the target cell so that it can take appropriate actions at appropriate times. If the source and target cells are time synchronised, the source and target use the same downlink timing. However, if the cells are not synchronised then the source cell needs to be aware of the target cell timing offset, which can either be communicated between the cells over network interface, x2, or the source cell may be operable to derive the timing offset in relation to the target through reception of a signal transmitted by the target cell.

From a source cell point of view, such a handover procedure requires the source cell to acquire the PRACH configuration of the target cell, then the source cell may be operable to continue communication with the user equipment until the next PRACH occasion for the target cell or until the user equipment stops communication with the source cell.

Similar to the scenarios described in relation to the D-SR case explained above, the target cell is operable to expect the arrival of the user equipment at the next PRACH occasion. If the user equipment fails to successfully complete the RACH procedure towards the target cell and reaches maximum PRACH transmission before handover successfully takes place, it may be operable to declare radio link failure and perform an RRC connection re-establishment procedure.

According to another implementation of an arrangement according to aspects and embodiments, a new configuration can be used in the handover procedure. That is to say, a new parameter may be added to the handover command message and according to that parameter the user equipment is informed of multiple instances of when to perform handover execution towards a target cell. Until those indicated instances, the user equipment continues communication with a source cell. Multiple instances may be signalled to user equipment; for example, by means of periodic occurring instances or multiple random instances, or multiple instances within a given time window. The user equipment procedures and network procedures, both on source and target side, are similar to those described in relation to previous embodiments.

Error handling in the case that the user equipment fails to acquire connection to the target cell may be such that a new procedure may occur. In one embodiment, the number of maximum connection attempts may be configured. If the user equipment reaches the maximum number of connection attempts to the target cell it may be configured to declare radio link failure and start an RRC connection re-establishment procedure. According to another embodiment, if the maximum connection attempt takes the form of a time window, the user equipment may be configured such that if it does not obtain connection to a target cell before the timer expiry the user equipment may declare connection failure.

In the instance that user equipment obtains connection to a target cell, the user equipment may be configured to transmit a handover command complete message towards the target cell in order to inform the network that handover has been successful.

It will be appreciated that aspects and embodiments may provide a method for enhanced handover. The methods described may reduce user plane interruption time and may re-use legacy procedure and signalling without need for use of a specific "handover activation timer".

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method of handing over a communication link between a cell (30) and user equipment (50) in a wireless communication network from a source cell to a target cell, said method comprising:
receiving, at user equipment (50), a handover command message comprising an indication of a plurality of handover instances at which said user equipment (50) is to attempt establishment of a communication link with said target cell;
attempting, at user equipment (50), establishment of a communication link with said target cell at a handover instance and monitoring for receipt of an indication that a communication link with said target cell has been established; and
maintaining, at user equipment (50), a communication link with said source cell through said plurality of handover instances, until said indication that said communication link with said target cell is established is received.

2. A method according to claim 1, wherein said indication of a plurality of handover instances comprises one or more of: an indication of a plurality of periodically occurring instances; an indication of a plurality of specific instances.

3. A method according to claim 1 or claim 2, wherein said indication of a plurality of handover instances comprises at least one of: a first instance at which said target cell expects an attempt at establishment of a communication link and a period to be applied to subsequent attempts; an instruction to attempt establishment of a communication link in accordance with said target cell PRACH configuration; or an instruction to attempt establishment of a communication link in accordance with said target cell D-SR configuration.

4. A method according to any one of claims 1 to 3, comprising:
receiving an indication of a handover command expiry time; and
requesting radio connection reestablishment if no communication link between said user equipment (50) and said source cell or said target cell exists at the handover command expiry time.

5. A method according to claim 5, wherein said indication of handover command expiry time comprises one or more of: an explicit time window; a maximum number of attempts at establishment of a communication link with said target cell.

6. A computer program product operable, when executed on a computer, to perform the method of any one of claims 1 to 5.

7. User equipment (50) configured to handover a communication link with a cell (30) in a wireless communication network from a source cell to a target cell, said user equipment (50) comprising:
reception logic configured to receive a handover command message comprising an indication of a plurality of handover instances at which said user equipment (50) is to attempt establishment of a communication link with said target cell;
communication link establishment logic configured to attempt establishment of a communication link with said target cell at a handover instance and monitor for receipt of an indication that a communication link with said target cell has been established; and
communication link maintenance logic configured to maintain a communication link with said source cell through said plurality of handover instances until said indication that said communication link with said target cell is established is received.

8. A source base station method of handing over a communication link between a cell (30) and user equipment (50) in a wireless communication network from a source cell to a target cell, said method comprising:
receiving, at said source base station (20), a handover command message comprising an indication of a plurality of handover instances at which said user equipment (50) is to attempt establishment of a communication link with said target cell;
determining, at said source base station (20), when said handover instances at which user equipment (50) may attempt establishment of a communication link with said target cell will occur;
monitoring, at said source base station (20), for receipt of an indication that a communication link with said target cell has been established; and
maintaining, at said source base station (20), a communication link with said user equipment (50) through said plurality of handover instances until said indication that said communication link with said target cell has been established is received.

9. A method according to claim 8, wherein determining when said handover instances at which user equipment (50) may attempt establishment of a communication link with said target cell will occur comprises: reading said handover command.

10. A method according to claim 8 or claim 9, wherein determining when said handover instances at which user equipment (50) may attempt establishment of a communication link with said target cell will occur comprises: requesting configuration information from said target cell.

11. A method according to any one of claims 8 to 10, wherein said indication that a communication link with said target cell has been established comprises: monitoring, at said base station (20), for an absence of communication from said user equipment (50) after one of said handover instances.

12. A method according to any one of claims 8 to 10, wherein said indication that a communication link with said target cell has been established comprises: receiving a handover complete message from said wireless communication network.

13. A computer program product operable, when executed on a computer, to perform the method of any one of claims 8 to 12.

14. A base station (20) configured to handover a communication link between a source cell and user equipment (50) in a wireless communication network to a target cell, said base station (20) comprising:
reception logic configured to receiving a handover command message comprising an indication of a plurality of handover instances at which said user equipment (50) is to attempt establishment of a communication link with said target cell;
timing determination logic configured to determine when said handover instances at which user equipment (50) may attempt establishment of a communication link with said target cell will occur;
monitoring logic configured to monitor for receipt of an indication that a communication link with said target cell has been established; and
communication link maintenance logic configured to maintain a communication link with said user equipment (50) through said plurality of handover instances until said indication that said communication link with said target cell has been established is received.

## Patentansprüche

1. Teilnehmergerätverfahren zur Übergabe einer Kommunikationsverbindung zwischen einer Zelle (30) und einem Teilnehmergerät (50) in einem drahtlosen Kommunikationsnetzwerk von einer Quellzelle an eine Zielzelle, wobei das besagte Verfahren umfasst:
Empfangen, an dem Teilnehmergerät (50), einer Übergabebefehlsnachricht, die eine Angabe einer Vielzahl von Übergabeinstanzen umfasst, an denen das besagte Teilnehmergerät (50) den Aufbau einer Kommunikationsverbindung mit der besagten Zielzelle versuchen soll;
Versuchen, an dem Teilnehmergerät (50), eine Kommunikationsverbindung mit der besagten Zielzelle an einer Übergabeinstanz aufzubauen, und Überwachen des Empfangs einer Angabe, dass eine Kommunikationsverbindung mit der besagten Zielzelle aufgebaut wurde; und
Aufrechterhalten, an dem Teilnehmergerät (50), einer Kommunikationsverbindung mit der besagten Quellzelle über die besagte Vielzahl von Übergabeinstanzen, bis die besagte Angabe, dass die besagte Kommunikationsverbindung mit der besagten Zielzelle aufgebaut ist, empfangen wird.

2. Verfahren nach Anspruch 1, wobei die besagte Angabe einer Vielzahl von Übergabeinstanzen eine oder mehrere umfasst aus: einer Angabe einer Vielzahl von periodisch auftretenden Instanzen; einer Angabe einer Vielzahl von spezifischen Instanzen.

3. Verfahren nach Anspruch 1 oder 2, wobei die besagte Angabe einer Vielzahl von Übergabeinstanzen mindestens eine umfasst aus: einer ersten Instanz, an der die besagte Zielzelle einen Versuch eines Aufbaus einer Kommunikationsverbindung und einen auf nachfolgende Versuche anzuwendenden Zeitraum erwartet; einer Anweisung, den Aufbau einer Kommunikationsverbindung in Übereinstimmung mit der PRACH-Konfiguration der besagten Zielzelle zu versuchen; oder einer Anweisung, den Aufbau einer Kommunikationsverbindung in Übereinstimmung mit der D-SR-Konfiguration der besagten Zielzelle zu versuchen.

4. Verfahren nach einem beliebigen der Ansprüche 1 bis 3, umfassend:
Empfangen einer Angabe einer Übergabebefehlsablaufzeit; und
Anfordern eines Funkverbindungswiederaufbaus, wenn zur Übergabebefehlsablaufzeit keine Kommunikationsverbindung zwischen dem besagten Teilnehmergerät (50) und der besagten Quellzelle oder der besagten Zielzelle besteht.

5. Verfahren nach Anspruch 5, wobei die besagte Angabe einer Übergabebefehlsablaufzeit eines oder mehrere umfasst aus: einem expliziten Zeitfenster; einer maximalen Anzahl von Versuchen, eine Kommunikationsverbindung mit der besagten Zielzelle aufzubauen.

6. Computerprogrammprodukt, das bei Ausführung auf einem Computer betriebsfähig ist, das Verfahren nach einem beliebigen der Ansprüche 1 bis 5 durchzuführen.

7. Teilnehmergerät (50), das konfiguriert ist zur Übergabe einer Kommunikationsverbindung mit einer Zelle (30) in einem drahtlosen Kommunikationsnetzwerk von einer Quellzelle an eine Zielzelle, wobei das besagte Teilnehmergerät (50) umfasst:
Empfangslogik, die konfiguriert ist zum Empfangen einer Übergabebefehlsnachricht, die eine Angabe einer Vielzahl von Übergabeinstanzen umfasst, an denen das besagte Teilnehmergerät (50) den Aufbau einer Kommunikationsverbindung mit der besagten Zielzelle versuchen soll;
Kommunikationsverbindungsaufbaulogik, die konfiguriert ist zum Versuchen, eine Kommunikationsverbindung mit der besagten Zielzelle an einer Übergabeinstanz aufzubauen, und zum Überwachen des Empfangs einer Angabe, dass eine Kommunikationsverbindung mit der besagten Zielzelle aufgebaut wurde; und
Kommunikationsverbindungsaufrechterhaltungslogik, die konfiguriert ist zum Aufrechterhalten einer Kommunikationsverbindung mit der besagten Quellzelle über die besagte Vielzahl von Übergabeinstanzen, bis die besagte Angabe, dass die besagte Kommunikationsverbindung mit der besagten Zielzelle aufgebaut ist, empfangen wird.

8. Quellbasisstationsverfahren zur Übergabe einer Kommunikationsverbindung zwischen einer Zelle (30) und einem Teilnehmergerät (50) in einem drahtlosen Kommunikationsnetzwerk von einer Quellzelle an eine Zielzelle, wobei das besagte Verfahren umfasst:
Empfangen, an der besagten Quellbasisstation (20), einer Übergabebefehlsnachricht, die eine Angabe einer Vielzahl von Übergabeinstanzen umfasst, an denen das besagte Teilnehmergerät (50) den Aufbau einer Kommunikationsverbindung mit der besagten Zielzelle versuchen soll;
Bestimmen, an der besagten Quellbasisstation (20), wann die besagten Übergabeinstanzen, an denen das Teilnehmergerät (50) den Aufbau einer Kommunikationsverbindung mit der besagten Zielzelle versuchen soll, auftreten werden;
Überwachen, an der besagten Quellbasisstation (20), des Empfangs einer Angabe, dass eine Kommunikationsverbindung mit der besagten Zielzelle aufgebaut wurde; und
Aufrechterhalten, an der besagten Quellbasisstation (20), einer Kommunikationsverbindung mit dem besagten Teilnehmergerät (50) über die besagte Vielzahl von Übergabeinstanzen, bis die besagte Angabe, dass die besagte Kommunikationsverbindung mit der besagten Zielzelle aufgebaut ist, empfangen wird.

9. Verfahren nach Anspruch 8, wobei das Bestimmen, wann die besagten Übergabeinstanzen, an denen das Teilnehmergerät (50) den Aufbau einer Kommunikationsverbindung mit der besagten Zielzelle versuchen soll, auftreten werden, umfasst: Lesen des besagten Übergabebefehls.

10. Verfahren nach Anspruch 8 oder 9, wobei das Bestimmen, wann die besagten Übergabeinstanzen, an denen das Teilnehmergerät (50) den Aufbau einer Kommunikationsverbindung mit der besagten Zielzelle versuchen soll, auftreten werden, umfasst: Anfordern einer Konfigurationsinformation von der besagten Zielzelle.

11. Verfahren nach einem beliebigen der Ansprüche 8 bis 10, wobei die besagte Angabe, dass eine Kommunikationsverbindung mit der besagten Zielzelle aufgebaut wurde, umfasst: Überwachen, an der besagten Basisstation (20), fehlender Kommunikation von dem besagten Teilnehmergerät (50) nach einer der besagten Übergabeinstanzen.

12. Verfahren nach einem beliebigen der Ansprüche 8 bis 10, wobei die besagte Angabe, dass eine Kommunikationsverbindung mit der besagten Zielzelle aufgebaut wurde, umfasst: Empfangen einer Übergabeabschlussnachricht von dem besagten drahtlosen Kommunikationsnetzwerk.

13. Computerprogrammprodukt, das bei Ausführung auf einem Computer betriebsfähig ist, das Verfahren nach einem beliebigen der Ansprüche 8 bis 12 durchzuführen.

14. Basisstation (20), die konfiguriert ist zur Übergabe einer Kommunikationsverbindung zwischen einer Quellzelle und einem Teilnehmergerät (50) in einem drahtlosen Kommunikationsnetzwerk an eine Zielzelle, wobei die besagte Basisstation (20) umfasst:
Empfangslogik, die konfiguriert ist zum Empfangen einer Übergabebefehlsnachricht, die eine Angabe einer Vielzahl von Übergabeinstanzen umfasst, an denen das besagte Teilnehmergerät (50) den Aufbau einer Kommunikationsverbindung mit der besagten Zielzelle versuchen soll;
Zeitsteuerungsbestimmungslogik, die konfiguriert ist zum Bestimmen, wann die besagten Übergabeinstanzen, an denen das Teilnehmergerät (50) den Aufbau einer Kommunikationsverbindung mit der besagten Zielzelle versuchen soll, auftreten werden;
Überwachungslogik, die konfiguriert ist zum Überwachen des Empfangs einer Angabe, dass eine Kommunikationsverbindung mit der besagten Zielzelle aufgebaut wurde; und
Kommunikationsverbindungsaufrechterhaltungslogik, die konfiguriert ist zum Aufrechterhalten einer Kommunikationsverbindung mit dem besagten Teilnehmergerät (50) über die besagte Vielzahl von Übergabeinstanzen, bis die besagte Angabe, dass die besagte Kommunikationsverbindung mit der besagten Zielzelle aufgebaut ist, empfangen wird.

## Revendications

1. Procédé d'équipement utilisateur de transfert d'une liaison de communication entre une cellule (30) et un équipement utilisateur (50) dans un réseau de communication sans fil à partir d'une cellule source vers une cellule cible, ledit procédé comprenant les étapes suivantes :
recevoir, au niveau de l'équipement utilisateur (50), un message de commande de transfert comprenant une indication d'une pluralité d'instances de transfert auxquelles ledit équipement utilisateur (50) doit tenter d'établir une liaison de communication avec ladite cellule cible ;
tenter, au niveau de l'équipement utilisateur (50), l'établissement d'une liaison de communication avec ladite cellule cible au niveau d'une instance de transfert et surveiller la réception d'une indication selon laquelle une liaison de communication avec ladite cellule cible a été établie ; et
maintenir, au niveau de l'équipement utilisateur (50), une liaison de communication avec ladite cellule source par l'intermédiaire de ladite pluralité d'instances de transfert, jusqu'à ce que ladite indication, selon laquelle ladite liaison de communication avec ladite cellule cible est établie, soit reçue.

2. Procédé selon la revendication 1, dans lequel ladite indication d'une pluralité d'instances de transfert comprend au moins une des indications suivantes : une indication d'une pluralité d'instances se produisant périodiquement ; une indication d'une pluralité d'instances spécifiques.

3. Procédé selon la revendication 1 ou la revendication 2, dans lequel ladite indication d'une pluralité d'instances de transfert comprend au moins un des éléments suivants : une première instance à laquelle ladite cellule cible prévoit une tentative d'établissement d'une liaison de communication et d'une période à appliquer à des tentatives ultérieures ; une instruction pour tenter d'établir une liaison de communication conformément à ladite configuration PRACH de cellule cible ; ou une instruction pour tenter d'établir une liaison de communication conformément à ladite configuration D-SR de cellule cible.

4. Procédé selon l'une quelconque des revendications 1 à 3, comprenant les étapes suivantes :
recevoir une indication d'un temps d'expiration de commande de transfert ; et
demander un rétablissement de connexion radio si aucune liaison de communication entre ledit équipement utilisateur (50) et ladite cellule source ou ladite cellule cible n'existe au niveau du temps d'expiration de commande de transfert.

5. Procédé selon la revendication 5, dans lequel ladite indication d'un temps d'expiration de commande de transfert comprend au moins un des éléments suivants : une fenêtre temporelle explicite ; un nombre maximum de tentatives d'établissement d'une liaison de communication avec ladite cellule cible.

6. Produit de programme informatique permettant, lorsqu'il est exécuté sur un ordinateur, d'exécuter le procédé selon l'une quelconque des revendications 1 à 5.

7. Équipement utilisateur (50) configuré pour transférer une liaison de communication avec une cellule (30) dans un réseau de communication sans fil à partir d'une cellule source vers une cellule cible, ledit équipement utilisateur (50) comprenant :
une logique de réception configurée pour recevoir un message de commande de transfert comprenant une indication d'une pluralité d'instances de transfert auxquelles ledit équipement utilisateur (50) doit tenter d'établir une liaison de communication avec ladite cellule cible ;
une logique d'établissement de liaison de communication configurée pour tenter d'établir une liaison de communication avec ladite cellule cible au niveau d'une instance de transfert et surveiller la réception d'une indication selon laquelle une liaison de communication avec ladite cellule cible a été établie ; et
une logique de maintien de liaison de communication configurée pour maintenir une liaison de communication avec ladite cellule source par l'intermédiaire de ladite pluralité d'instances de transfert jusqu'à ce que ladite indication, selon laquelle ladite liaison de communication avec ladite cellule cible est établie, soit reçue.

8. Procédé de station de base source de transfert sur une liaison de communication entre une cellule (30) et un équipement utilisateur (50) dans un réseau de communication sans fil à partir d'une cellule source vers une cellule cible, ledit procédé comprenant les étapes suivantes :
recevoir, au niveau de ladite station de base source (20), un message de commande de transfert comprenant une indication d'une pluralité d'instances de transfert auxquelles ledit équipement utilisateur (50) doit tenter d'établir une liaison de communication avec ladite cellule cible ;
déterminer, au niveau de ladite station de base source (20), le moment où lesdites instances de transfert, auxquelles l'équipement utilisateur (50) peut tenter d'établir une liaison de communication avec ladite cellule cible, se produiront ;
surveiller, au niveau de ladite station de base source (20), la réception d'une indication selon laquelle une liaison de communication avec ladite cellule cible a été établie ; et
maintenir, au niveau de ladite station de base source (20), une liaison de communication avec ledit équipement utilisateur (50) par l'intermédiaire de ladite pluralité d'instances de transfert jusqu'à ce que ladite indication, selon laquelle ladite liaison de communication avec ladite cellule cible a été établie, soit reçue.

9. Procédé selon la revendication 8, dans lequel la détermination du moment où lesdites instances de transfert, auxquelles l'équipement utilisateur (50) peut tenter d'établir une liaison de communication avec ladite cellule cible, se produiront, comprend ; la lecture de ladite commande de transfert.

10. Procédé selon la revendication 8 ou la revendication 9, dans lequel la détermination du moment où lesdites instances de transfert, auxquelles l'équipement utilisateur (50) peut tenter d'établir une liaison de communication avec ladite cellule cible, se produiront, comprend l'étape suivante : demander des informations de configuration à ladite cellule cible.

11. Procédé selon l'une quelconque des revendications 8 à 10, dans lequel ladite indication selon laquelle une liaison de communication avec ladite cellule cible a été établie comprend l'étape suivante : surveiller, au niveau de ladite station de base (20), une absence de communication à partir dudit équipement utilisateur (50) après une desdites instances de transfert.

12. Procédé selon l'une quelconque des revendications 8 à 10, dans lequel ladite indication selon laquelle une liaison de communication avec ladite cellule cible a été établie comprend l'étape suivante : recevoir un message complet de transfert à partir dudit réseau de communication sans fil.

13. Produit de programme informatique permettant, lorsqu'il est exécuté sur un ordinateur, d'exécuter le procédé selon l'une quelconque des revendications 8 à 12.

14. Station de base (20) configurée pour transférer une liaison de communication entre une cellule source et un équipement utilisateur (50) dans un réseau de communication sans fil et une cellule cible, ladite station de base (20) comprenant :
une logique de réception configurée pour recevoir un message de commande de transfert comprenant une indication d'une pluralité d'instances de transfert auxquelles ledit équipement utilisateur (50) doit tenter d'établir une liaison de communication avec ladite cellule cible ;
une logique de détermination de synchronisation configurée pour déterminer le moment où lesdites instances de transfert, auxquelles l'équipement utilisateur (50) peut tenter d'établir une liaison de communication avec ladite cellule cible, se produiront ;
une logique de surveillance configurée pour surveiller la réception d'une indication selon laquelle une liaison de communication avec ladite cellule cible a été établie ; et
une logique de maintien de liaison de communication configurée pour maintenir une liaison de communication avec ledit équipement utilisateur (50) par l'intermédiaire de ladite pluralité d'instances de transfert jusqu'à ce que ladite indication, selon laquelle ladite liaison de communication avec ladite cellule cible a été établie, soit reçue.
